(19) Europäisches Patentamt
European Patent Office
Office européen des brevets

(11) EP 0 856 570 A2

(12) EUROPEAN PATENT APPLICATION

(43) Date of publication:
**05.08.1998 Bulletin 1998/32**

(51) Int. Cl.$^6$: **C09K 3/10**

(21) Application number: **98101454.1**

(22) Date of filing: **28.01.1998**

(84) Designated Contracting States:
**AT BE CH DE DK ES FI FR GB GR IE IT LI LU MC NL PT SE**
Designated Extension States:
**AL LT LV MK RO SI**

(30) Priority: **30.01.1997 IT MI970174**

(71) Applicant: **Ausimont S.p.A.**
**20121 Milano (IT)**

(72) Inventors:
- **Corti, Costante**
**Milano (IT)**
- **Savelli, Paolo**
**Bresso, Milano (IT)**

(74) Representative:
**Sama, Daniele, Dr. et al**
**Sama Patents,**
**Via G.B. Morgagni, 2**
**20129 Milano (IT)**

# (54) Antiseizure and sealing pastes

(57) Use as sealing and antiseizure agents of pastes comprising at least:

A) 35-70% by weight of polytetrafluoroethylene irradiated with gamma rays and/or electron beam having molecular weight between 100,000 and 700,000, with sizes of the powder particles from 2 to 7 micron.
B) 30-65% by weight of one or more perfluoropolyethers having viscosity comprised between 20 and 2000 cSt at 20°C and comprising in the polymeric chain fluorooxyalkylenic units selected from the following:

$(CF_2O)$, 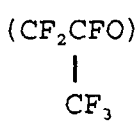, 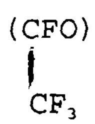,

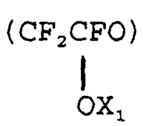 and 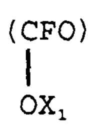,

optionally $(CF_2CF_2O)$;
wherein $X_1$ is $-(CF_2)_nCF_3$ and n = 0,1,2,3,4, said units being randomly distributed in the polymeric chain.

EP 0 856 570 A2

## Description

The present invention relates to pastes having antiseizure and sealing properties to be used for static applications.

At present as antiseizure pastes are used conventional greases containing as thickening agents copper, zinc, molibdenum disulphide, graphite, talc, polytetrafluoroethylene, etc., and as sealing pastes resins, silicone products, etc. The drawback of the antiseizure pastes resides in that they during the application owing to the temperature or the time to decompose by forming sludges and carbonaceous residues while the metal powders are transformed into oxides having characteristics different from those of the original metal.

Moreover the antiseizure and sealing pastes tend to dry owing to thermal rises and to the air action. The pastes can come into contact with fittings of plasto-elastomeric material; the pastes, of silicone type, hydrocarbon or other, tend to swell the fittings which lose their physical-mechanical characteristics. Therefore the sealing and antiseizure properties are not maintained during the time therefore it is necessary to apply a higher torque (twisting moment) for instance, in the unscrewing of screws and bolts.

Also lubricating greases based on polytetrafluoroethylene (PTFE) and perfluoropolyethers (PFPE) are known in the art. See for instance USP 4,472,290 wherein a specific process for preparing greases is described, in order to increase the stability of the lubricating properties during the time , in particular to reduce the oil separation during ageing. Said processes are generally very long and delicate. It is to be noted that the preparation process described in said patent is remarkably improved with respect to the processes of the prior art wherein PTFE suspensions in solvents were utilized and which required the evaporation of high amounts of solvent leading however to greases still containing residues of solvent which further worsened the grease stability. The process of the above mentioned patent consisted in utilizing a PTFE having molecular weight between 500,000 and 1,000,000, soaking and suspension of the PTFE particles in a perfluoropolyether liquid having kinematic viscosity between 20 and 4000 cSt at 20°C, preferably between 40 and 1600 cSt at 20°C in the case of Fomblin® Y, or between 40 and 6000 cSt at 20°C preferably between 60 and 6000 in the case of Fomblin® Z, in the case of mixed Fomblin® containing as repetitive units both the ones of Fomblin® Y and those of Fomblin® Z viscosity between 40 and 30,000 cSt at 20°C. Then the aggregate disaggregation was carried out by means of a milling process and by a refining treatment to directly obtain the final grease. In order to obtain the results of the invention it was necessary to heat the PTFE particles for about 2 hours at 50°C under vacuum to evacuate them from air and from the condensed vapours; the soaking and suspension treatment had to be carried out at a temperature higher than the room temperature and at a reduced pressure; the perfluoropolyether liquid had to be deaerated; the refining was effected with a triple roll mill which worked under pressure and at a different roll speed. If one did not operate in the conditions described therein, microbreaking of the primary particles or their reaggregation or sintering in fibrous or irregular aggregates could occur.

In the US patent described above it is stated that if the passages of the process described therein are not carried out, greases showing the results of the invention are not obtained.

It was felt the need to have available a semplified process from an industrial point of view allowing to obtain a paste with antiseizure and sealing properties.

It has been surprisingly and unexpectedly found a process as described hereinafter leading to obtain a paste with the indicated properties.

It is an object of the present invention a paste based on polytetrafluoroethylene (PTFE) and perfluoropolyethers (PFPE) having improved antiseizure and sealing properties and an improved behaviour during the time since the initial properties remain unchanged.

Another object of the present inention is the use of said paste as antiseizure and sealiang agent. As antiseizure agent for instance it can be used in the car field (injectors screws, nuts, bolts, etc.) and in mechanics in general. As sealing agent it can for instance be used in the car field; in the chemical industry especially in aggressive or corrosive environments; in industry in general, for istance for flange-flange couplings.

A further object of the present invention is a process for preparing said paste with a semplified process from an industrial point of view.

The paste object of the present invention is formulated by using as fluid a PFPE and as thickener a particular type of PTFE. The PTFE owing to its lubricating properties favours in the case of the antiseizure properties an improvement of the properties themselves and in the case of the sealing properties a better contact between, for instance, two metals. As antiseizure agent the paste object of the present invention makes easier the unscrewing for instance of screws and of studs, assembled in a given mechanical component, requiring after the usage a couple lower than that necesary with the conventional products. Moreover in any case it is avoided that seizures occur. The paste object of the present invention moreover improves the metal-metal seal and, where it is necessary the presence of an elastomeric fitting, the use of fittings moistened with the paste object of the present invention leads to an improvement of their performance in terms of duration, seal and of physical mechanical properties in a range of temperature between -30°C and +270°C.

The paste object of the present invention practically remains always soft, sufficiently elastic so as to "absorb" the negative effect of possible vibrations.

Said paste is characterized in that it contains at least by weight:

a) 35-70% by weight of polytetrafluoroethylene irradiated with gamma rays and/or electron beam, having molecular weight between 100,000 and 700,000, with sizes of the powder particles from 2 to 7 micron;
b) 30-65% by weight of one or more perfluoropolyethers (PFPE) having viscosity generally comprised between 20 and 2000 cSt at 20°C, preferably between 100 and 1000 cSt at 20°C and comprising in the polymeric chain fluorooxyalkylenic units selected from the following:

$(CF_2O)$, 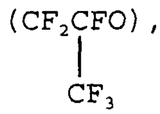, 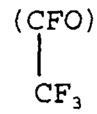,

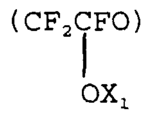 and 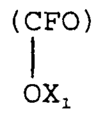,

optionally $(CF_2CF_2O)$;
wherein $X_1$ is $-(CF_2)_nCF_3$ and n = 0,1,2,3,4, said units being randomly distributed in the polymeric chain. The end groups of the PFPE are: $-CF_3$, $-C_2F_5$, $-C_3F_7$. Optionally end groups containing chlorine are present: $ClCF_2CF(CF_3)-$, $CF_3CFClCF_2-$, $ClCF_2CF_2-$, $ClCF_2-$.

A mixture of perfluoropolyethers is preferably utilized wherein at least 15% referred to the total weight of the paste has a viscosity comprised between 1000 and 1500 cSt at 20°C, so that the final viscosity of the mixture is comprised between 100 and 1000 cSt at 20°C.

By irradiated polytetrafluoroethylene it is meant a polytetrafluoroethylene which has been subjected to irradiation treatment by gamma rays or by an electron beam. It can be cited for instance PTFE Algoflon® L206 and Algoflon® L203 produced by AUSIMONT and Polymist® F-5A. The use of the irradiated PTFE as described above is an essential characteristic for obtaining the present invention.

Perfluoropolyethers of "neutral" type can for instance be used, i.e. having perfluoroalkylic end groups with viscosity at 20°C generally comprised between 20 and 4000 cSt and average molecular weight between 250 and 20,000 selected from the following classes:

(a)

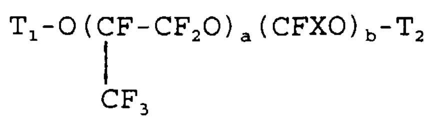

wherein:
$T_1$ and $T_2$, equal to or different from each other, can be $-CF_3$, $-C_2F_5$, $-C_3F_7$ groups, X is -F or $-CF_3$; a, b are integers such that the molecular weight is comprised in the range indicated above.
These perfluoropolyethers ar obtained according to the process described in U.K. patent 1,104,482 and with subsequent conversion of the end groups into unreactive groups according to the process described in UK patent 1,226,566.
(b)

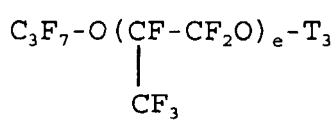

wherein:
$T_3$ can be $-C_2F_5$, $-C_3F_7$; e is a number such that the molecular weight is comprised in the range indicated above. These compounds are prepared by ionic oligomerization of the hexafluoropropene epoxide and subsequent treatment of the acyl fluoride (COF) with fluorine according to USP 2,242,218.

(c)

$$T_4\text{-}O(\underset{\displaystyle CF_3}{\underset{|}{C}}F\text{-}CF_2O)_g(C_2F_4O)_h(CFXO)_i\text{-}T_5$$

wherein:
$T_4$ and $T_5$, equal to or different from each other, are perfluorinated groups $-CF_3$, $-C_2F_5$, $-C_3F_7$; X is -F or $-CF_3$; g, h, i, are integers such that the molecular weight is comprised in the range indicate above.
These products are obtained by photooxidation of mixtures of $C_3F_6$ and $C_2F_4$ and subsequent treatment with fluorine according to the process described in USP 3,665,041.

The (per)fluoropolyethers with chlorinated end groups can be obtained for intance as described in the patents USP 3,810,874 and EP 151,877 herein incorporated by reference. The used perfluoropolyethers are preferably those belonging to the class a).

Preferably the paste object of the present invention is characterized in that it contains by weight at least:

a) 50-60% by weight of polytetrafluoroethylene;
b) 40-50% by weight of a mixture of perfluoropolyethers having viscosity between 100 and 150 cSt at 20°C wherein at least 15% by weight referred to the total has a viscosity comprised between 1000 and 1300 cSt at 20°C.

Optionally to the paste object of the present invention 0.1-2% by weight of fluorinated additives (antirust and/or antiwear) can be added, such as for instance those described in European patents EP 95825 and EP 382224 herein incorporated by reference or up to 25% of graphite, talc, metal powders and other additives known in the art.

The paste object of the present invention is obtained according to the following process comprising:

a) addition to PTFE, optionally containing the mentioned additives, of the perfluoropolyether fluid;
b) mixing of the components for a time sufficient to obtain an homogeneous product. The time is generally higher than 6 hours, preferably 8-10 hours.

By homogeneous product it is meant a mixture of the components of the invention wherein clots are not visible and that it does not contain aggregated PTFE particles and/or not soaked with perfluoropolyether. The skilled in the art is easily capable of determining whether the mixture is homogeneous or not.

After step a) the mixture is preferably left to rest for about twelve hours in order to allow PTFE to absorb the fluid.

The irradiated PTFE can be obtained as follows. As it is well known to the skilled in the art two different tetrafluoroethylene polymerization processes are used to obtain polytetrafluoroethylene. It is possible to obtain PTFE as a dispersion or as a suspension.

In the dispersion case the particle size of the latex is 0.1-0.3 micron. After the coagulation process the particle size of the powder increases very much (100-500 micron about). The PTFE is irradiated by gamma rays and then milled. The final particle size of the powder is lower than 10 micron. Commercial products PTFE Algoflon® L206 and Algoflon® L203 are obtained by said dispersion process.

When the PTFE is obtained as a suspension the particle size ia 2-5 micron. Then the PTFE is irradiated by electron beam and then milled. Also in this case the partcle size of the final powder is lower than 10 micron. The commercial product PTFE Plymist® is obtained by a suspension process.

The molecular weight of polytetrafluoroetilene is determined by measuring the end groups of PTFE by neans of FTIR spectroscopy. The analysis procedure consists in collecting IR spectra of the samples then in performing the subtraction of the reference spectrum. The reference spectrum is relative to a polymer which has been exposed to elemental fluorine, in order to convert all functional end groups to perfluoroalkyl groups. By means of reference model compounds the relative extintion coefficient of analytical absorption bands relative to end groups is assigned and determined. In the present analysis the following end groups are observed: $R_F$-($CF_2$-COOH) and $R_F$-($CF_2$-COF). The total amount of end groups is expressed in mole/Kg. From this information an approximative evaluation of numerical molecular weight ($M_n$) is obtained.

As a matter of fact, the total amount of end groups above cited can be indicated: $N_{end\ groups} = X$ (mole/kg) . The numerical molecular weight can be obtained by using the formula: $M_n = 2000/X$ .

The following examples are given for illustrative purposes but are not limitative of the scope of the invention.

EXAMPLE 1

To 550 g of polytetrafluoroethylene having sizes of the powder particles of 5 micron, numerical molecular weight $M_n$ of 100,000 and specific area between 1 and 3 $m^2/g$ irradiated by electron beam (known with the trademark Polymist® F-5A), 150 g of perfluoropolyether (Fomblin® YR AUSIMONT) are added, having the formula

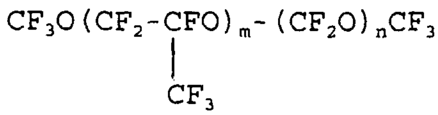

with an average molecular weight 5960 and a ratio m/n 20, viscosity 1159 cSt at 20°C and 300 g of perfluoropolyether (Galden® D40 AUSIMONT) of formula

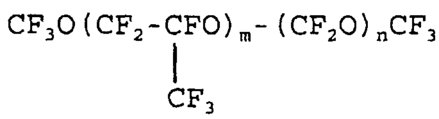

with an average molecular weight 1475 and a m/n ratio 200, viscosity 36.7 cSt at 20°C.

After the mixture has been left to stay for 12 hours in an Apinox® S-1,5 mixer, it is mixed for 8 hours.

The obtained paste was characterized with the following properties:

NLGI consistency: degree 2
penetration of the unworked product (ASTM D217): 290 mm/10

EXAMPLE 2 comparative

To 400 g of non irradiated polytetrafluoroethylene having surface area 1-3 $m^2/g$, numerical molecular weight $M_n$ higher than 10,000,000 and average size of the powder particles 10 micron (known by the trademark Algoflon® MXP1) are added 200 g of perfluoropolyether (Fomblin® YR AUSIMONT), having the formula

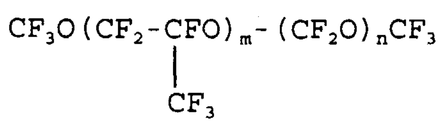

with an average molecular weight 5960 and a m/n 20 molar ratio, viscosity 1159 cSt at 20°C and 400 g of perfluoropolyether (Galden® D40 AUSIMONT) of formula

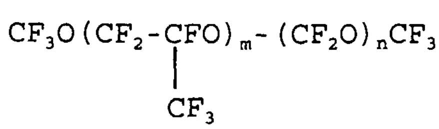

with an average molecular weight of 1505 and a m/n ratio 200, viscosity 38.6 cSt at 20°C.

After the mixture of the components has been left to rest for 12 hours in an Apinox® S-1,5 mixer, it is mixed for 8 hours.

The obtained paste appears absolutely non homogeneous, with clots having a spongy elastic aspect.

Properties:

NLGI consistency: undeterminable
penetration of the unworked product (ASTM D217): undeterminable.

EXAMPLE 3 comparative

To 770 g of polytetrafluoroethylene having size of the powder particles of 10 micron, numerical molecular weight $M_n$ of 340,000 and specific area comprised between 1 and 3 $m^2/g$ irradiated by gamma rays (known by the trademark Algoflon® L205) 230 g of perfluoropolyether (Fomblin® Z25 AUSIMONT) are added, having the formula

$$CF_3O(CF_2\text{-}CF_2O)_m\text{-}(CF_2O)_nCF_3$$

with an average molecular weight 9515 and a m/n ratio 0.7, viscosity 260 cSt at 20°C.

The mixture is treated as in example 1 by obtaining a non compact and pulverulent product.

Properties:

NLGI consistency: undeterminable
penetration of the unworked product (ASTM D217): undeterminable.

EXAMPLE 4

The paste obtained in example 1 was used to moisten rod screws which were then assembled in a motor and tightened with a tightening torque of 20 Nm by means of a dynamometric key (torque foreseen in the motor plan). The motor was subjected to a thermal cycle for 750 hours from room temperature up to 270°C, successively it was provided to disassemble the components. The torque necessary to the unscrewing of the screws was 22 Nm.

EXAMPLE 5 comparative

The example 4 was repeated by using to moisten the screws a paste at present on the market having the following composition % by weight:

78% of conventional non fluorinated grease based on lithium;
20% of copper powder;
2% of graphite.

At the end of the thermal cycle the torque necessary to the unsvrewing of the screws was 30 Nm.

EXAMPLE 6

The example 4 is repeated by moistening studs in the same motor, the tightening torque was of 100 Nm (torque foreseen in the plan); after the thermal cycle the couple necessary to the unscrewing was of 105 Nm.

EXAMPLE 7 comparative

The example 6 is repeated by utilizing a paste at present on the market having the composition % by weight:

60% of a conventional non fluorinated grease based on polyurea;
20% of PTFE;
10% of zinc powder;
10% of graphite.

At the end of the thermal cycle the torque necessary for the studs unscrewing was higher than 130 Nm.

EXAMPLE 8

In A pyrex glass flask (A) with female emery cone neck a vacuum tap (B) with male emery double cone is mounted

and on this a three-way joint (C) equipped with female emery cone for the junction to the tap (B), an emery cone to which an ionization vacuum feeler is connected and a vacuum tap (D) connected to a vacuum bench with oil pump. The volume comprised between the taps B and D is 50 $cm^3$.

All the emeries are moistened with the paste prepared according to example 1, the equipment is mounted and is connected with the vacuum system; after 30 minutes a residual pressure of 5 $10^{-2}$ mm Hg is reached, measured on the reader instrument in C. The tap D is closed and after 24 hours the pressure in the system A B is unchanged.

The tap is closed in B and B is disconnected from C, the piece A B is placed in a freezer conditioned at -25°C for 24 hours.

At the end the piece A B is extracted and the flask A is subjected to manual rotation for 20 times with respect to the joint B in the total time of 5 minutes, leaving the tap closed in B.

The joint C is connected to B, the vacuum is made again in the connection B C without opening the tap in D up to a final residual pressure of 8 $10^{-2}$ mm Hg. The tap D is closed so as to exclude the suction towards the pump, the tap B is opened and it is verified that the pressure of the system A B is 9 $10^{-2}$ mm Hg.

<u>EXAMPLE 9</u>

The equipment of example 8 is disassembled, without meeting any difficulty, without meeting "sticking" phenomena. The paste is still fluid without drying evidence.

<u>EXAMPLE 10 comparative</u>

The example 8 is repeated by using the paste described in example 5. After 24 hours the pressure measured was 40 mm Hg after further 24 hours in freezer at -25°C the manual rotation was not possible owing to the "sticking" of the joints.

**Claims**

1. Use as sealing and antiseizure agent of a paste comprising at least:

    a) 35-70% by weight of polytetrafluoroethylene irradiated with gamma rays and/or electron beam, having molecular weight between 100,000 and 700,000, with sizes of the powder particles from 2 to 7 micron;
    b) 30-65% by weight of one or more perfluoropolyethers having viscosity between 20 and 2000 cSt at 20°C and comprising in the polymeric chain fluorooxyalkylenic units selected from the following:

    $(CF_2O)$, 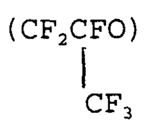, 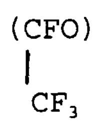,

    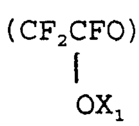 and 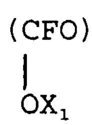,

    optionally $(CF_2CF_2O)$;
    wherein $X_1$ is $-(CF_2)_nCF_3$ and n = 0,1,2,3,4, said units being randomly distributed in the polymeric chain.
    said paste being obtained through the following process comprising:

    a1) addition to PTFE of the perfluoropolyether fluid;

    b1) mixing of the components for a time sufficient to obtain an homogeneous product.

2. Use as sealing and antiseizure agent of a paste according to claim 1 characterized in that the viscosity of one or more perfluoropolyethers is comprised between 100 and 1000 cSt at 20°C.

3. Use as sealing and antiseizure agent of a paste according to claims 1-2, characterized in that the mixing time sufficient to obtain an homogeneous product is comprised between 8 and 10 hours.

4. Use as sealing and antiseizure agent of a paste according to claims 1-3, characterized in that the perfluoropolyethers comprise a mixture of perfluoropolyethers wherein at least 15% referred to the total weight of the paste has a viscosity comprised between 1000 and 1500 cSt at 20°C, so that the final viscosity of the mixture is comprised between 100 and 1000 cSt at 20°C.

5. Use as sealing and antiseizure agent of a paste according to claims 3, characterized in that it contains at least:

a) 50-60% by weight of polytetrafluoroethylene;
b) 40-50% by weight of a mixture of perfluoropolyethers having viscosity between 100 and 150 cSt at 20°C wherein at least 15% by weight referred to the total has a viscosity comprised between 1000 and 1500 cSt at 20°C.

6. Use as sealing and antiseizure agent of a paste according to claims 1-5, characterized in that the perfluoropolyethers have an average molecular weight comprised between 250 and 20,000 and are selected from the following classes:

(a)

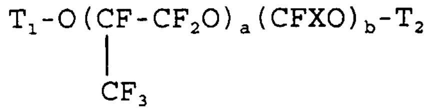

wherein:
$T_1$ and $T_2$, equal to or different from each other, can be $-CF_3$, $-C_2F_5$, $-C_3F_7$ groups, X is -F or $-CF_3$; a, b are integers such that the average molecular weight is comprised in the range indicated above.
(b)

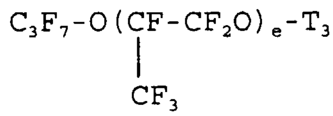

wherein:
$T_3$ can be $-C_2F_5$, $-C_3F_7$; e is an integer such that the molecular weight is comprised in the range indicated above;
(c)

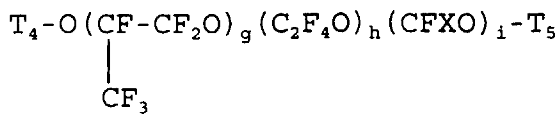

wherein:
$T_4$ and $T_5$, equal to or different from each other, are perfluorinated groups $-CF_3$, $-C_2F_5$, $-C_3F_7$; X is -F or $-CF_3$; g, h, i, are integers such that the molecular weight is comprised in the range indicate above.

7. Use as sealing and antiseizure agent of a paste according to claim 6 characterized in that the perfluoropolyethers have an average molecular weight between 250 and 20,000 and selected from class a).

8. Use as sealing and antiseizure agent of a paste according to claim 7 characterized in that the perfluoropolyethers have an average molecular weight between 250 and 20,000 and are selected from class a).
wherein:

$T_1$ and $T_2$, equal to or different from each other, can be $-CF_3$, $-C_2F_5$, $-C_3F_7$ groups, X is -F or $-CF_3$; a, b are integers such that the molecular weight is comprised in the range indicated above.

**9.** Sealing and antiseizure paste according to claims 1-8.

**10.** Process to obtain sealing and antiseizure pastes according to claims 1-8 comprising the following passages:

a1) addition to PTFE of the perfluoropolyether fluid;
b1) mixing of the components for a time sufficient to obtain an homogeneous product.